# EUROPEAN PATENT SPECIFICATION

(11) **EP 4 350 188 B1**
(45) Date of publication and mention of the grant of the patent: **09.12.2026**
(21) Application number: 23194926.4
(22) Date of filing: 01.09.2023
(51) Int. Cl.: F16L 3/24, B60R 16/02, F16B 2/08, F16B 5/12, H02G 3/32

(54) **SYSTEM WITH A CLIP AND A SUPPORT RAIL**
SYSTEM MIT EINER SCHELLE UND EINER TRÄGERSCHIENE
SYSTÈME AVEC UN COLLIER ET UN RAIL DE SUPPORT

(30) Priority: 04.10.2022 DE 102022125557
(43) Date of publication of application: 10.04.2024
(73) Proprietor: Accuride International GmbH, 65582 Diez/Lahn (DE)
(72) Inventor: HARVEY, Michael, Northampton, NN40TT (GB)
(74) Representative: WSL Patentanwälte Partnerschaft mbB

(56) References cited:
- EP-A1- 0 798 505
- WO-A1-2019/115100
- DE-B- 1 045 503
- US-A- 6 109 569
- US-A1- 2009 236 486
- US-B1- 7 523 898

## Description

### SUBJECT MATTER OF THE INVENTION

The present invention relates to a system with a support rail and a clip for receiving and detachably fastening a strand-like element to the support rail.

### BACKGROUND OF THE INVENTION

Strand-like elements, such as cables, cable harnesses, cable guides, hoses or tubes, are often permanently installed, for example in house construction by embedding them under plaster or in vehicle construction by fastening them to the car body by means of brackets or cable ties. However, there are requirements to install such strand-like elements only temporarily and detachably, but still securely.

An example of use is the cabling of a technical device mounted at least temporarily on the roof of an agricultural vehicle, such as a GPS device on a harvesting vehicle, where the cabling is to be routed from the device to the interior of the vehicle without disturbing or obstructing an operator of the vehicle, and without even the risk of the cabling forming loops protruding from the vehicle which could, for example, become caught on a tree or the like during operation.

Known systems for detachably securing tubular or pipe-shaped cable guides to an agricultural vehicle comprise a rail of substantially circular cross-section fixed, for example, to the body or other components of the vehicle, and clips for securing the cable guides to the rail, each clip having two interconnected portions adapted to the cross-sectional shape of the rail on the one hand and to the cross-sectional shape of the cable guide on the other hand for gripping the rail and the cable guide in a clamp-like manner. However, these known systems have disadvantages. The portion of the clip for clamp-like gripping of the cable guide is usually adapted to the diameter or cross-sectional shape of the cable guide and is unsuitable for fastening strand-like elements of a different diameter or cross-section. In addition, the holding force of the clamp-like sections of the known clips is often insufficient to prevent unintentional loosening of the fastening with sufficient reliability.

Known systems for detachably holding strand-like elements are disclosed in WO 2019/115100 A1, US 6 109 569, US 2009/236486 A1 and US 7 523 898 B1. A known support rail is disclosed in EP 0 798 505 A1.

### OBJECT OF THE INVENTION

An object of the present invention is to provide a means which securely holds strand-like elements, such as cables, cable ducts or harnesses, tubes or pipes, of various diameters and/or cross-sections in a detachable manner to a support rail.

### DESCRIPTION OF THE INVENTION

This object is solved by a system for receiving and detachably fastening a strand-like element, comprising a clip (1) and a support rail (2),
wherein the support rail has a cross-sectional profile which in a direction perpendicular to the cross-section extends over at least a portion of the length of the support rail and which cross-sectional profile is formed by a rail back section and a receiving section which is connected to the rail back section, wherein the cross-sectional profile of the receiving section has an inner wall which is formed by one or more curved and/or straight portions and which circumscribes a cavity enclosed by the receiving section, and wherein a latching projection or a latching recess is formed at the transition or adjacent to the transition from the rail back section to the receiving section,
the clip being designed for detachable latching mounting on the support rail and, in relation to a state mounted on the support rail, comprising the following:
   a body section with an abutment surface for abutment against the receiving section of the support rail,
   a strand securing section which adjoins the body section on the side facing away from the support rail and has a support surface for the strand-like element and securing means for releasably fixing and holding the strand-like element on the support surface,
   a rail mounting section adjoining the body section on the side facing the support rail and having a first clip securing portion and a second clip securing portion which have spaced-apart opposed portions extending into the cavity enclosed by the receiving section and engage on opposite sides with the inner wall formed by the receiving section,
   wherein at least one of said first and second clip securing portions is resiliently connected to said body section in such a manner that said clip securing portions are movable towards each other against a resilient force,
   wherein the second clip securing portion has in cross-section a latching profile for latching engagement with the latching projection or the latching recess of the support rail.

The present disclosure relates to a clip, which is designed for receiving and detachably fastening a strand-like element to a support rail having the features as described and defined herein. The features of the clip of the present invention are herein described and defined in relation to a state mounted on the support rail. The present invention relates to a system for receiving and detachably fastening a strand-like element, which system comprises one or more of the clips of the present invention and one or more of the support rails, as defined herein.

The clip of the present invention is designed for detachable latching mounting on a support rail having a cross-sectional profile, which extends over at least a portion of the length or longitudinal extension, respectively, of the support rail. In a preferred embodiment the support rail has the same cross-sectional profile over most of its length or over its entire length, at least with respect to those sections of the support rail provided for engagement with the clip of the present invention.

The cross-sectional profile of the support rail suitable for engagement with the clip of the present invention comprises a rail back section and a receiving section which is connected to the rail back section. In cross-section, the receiving section partially encloses or circumscribes, respectively, a cavity, as can be seen in the appended figures showing an embodiment of the invention. The cross-sectional profile of the inner wall of this cavity circumscribed by the receiving section is formed by one or more curved and/or straight portions. In an embodiment of the invention the cross-sectional profile of the inner wall of the receiving section is formed by one circularly curved portion and has the shape of a segment of a circle.

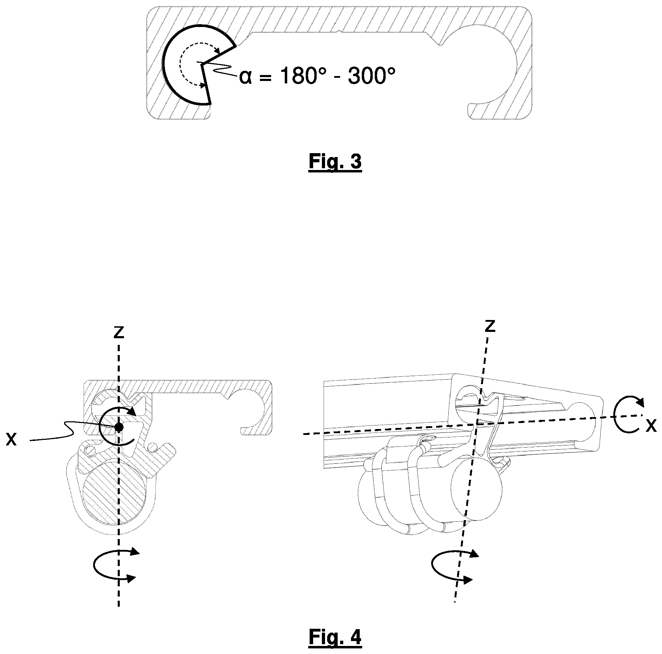

Preferably, the inner wall of the receiving section circumscribes an angle α of 180° to 300°. Appended figure 3 shows an example of a segment of a circle cavity formed by the inner wall of the receiving section with the circumscribed angle α in the order of about 250°, i. e., within the range from 180° to 300°, from edge to edge of the opening of the cavity.

The cross-sectional shape of the cavity formed by the inner walls is not limited to a segment of a circle. In cases where the inner wall of the receiving section is formed by more than one curved and/or straight portions the circumscribed angle of 180° to 300° relates to the segment of a circle of the largest possible diameter that can be inscribed into the cavity enclosed by the receiving section.

If the angle circumscribed by the inner wall of the receiving section is less than 180°, there is a danger that the clip will not be sufficiently securely held in the receiving section and may become unintentionally detached from the support rail. If the angle circumscribed by the inner wall of the receiving section is larger than 300°, the opening of the receiving section may be too small to insert and engage the clip securing portions of the rail mounting section into the receiving section.

The cross-sectional profile of the support rail suitable for engagement with the clip of the present invention further comprises a latching projection or a latching recess formed at the transition or adjacent to the transition from the rail back section to the receiving section and being designed for latching and securing engagement with a corresponding latching profile of the second clip securing portion when the clip is mounted to the support rail. In the embodiment shown in the appended figures, the support rail comprises a latching projection at the transition from the rail back section to the receiving section, whereby the latching projection forms a portion of the inner wall of the cavity enclosed by the receiving section. However, other latching profiles are suitable as well for latching and securing engagement with a corresponding latching profile of the second clip securing portion. In the sense of the present invention the term "adjacent" to the transition from the rail back section to the receiving section means that the latching projection or latching recess is positioned sufficiently close to the transition from the rail back section to the receiving section that the latching and securing engagement with a corresponding latching profile of the second clip securing portion is still possible.

Since the above-described cross-sectional profile of the support rail, which is suitable for the engagement with the clip of the present invention, extends over at least a portion of the length of the support rail, preferably over most of its length or over its entire length, the clip is able to slide or can be displaced along the extension of such profile of the support rail. Accordingly, the clip may be positioned or shifted along the support rail to positions wherever needed to securely fasten the strand-like element to the support rail.

The clip of the present invention is preferably made in one piece, however, it may also be made in several pieces, which are assembled, joined, fused, agglutinated or otherwise connected to each other. In a preferred embodiment the clip is made of plastic, such as by extrusion moulding or injection moulding processes.

Independent whether the clip is made in one piece or made in one several pieces subsequently connected together, the clip of the present invention can be described to comprise three sections, a body section, a strand securing section, which adjoins the body section on the side facing away from the support rail, and a rail mounting section, which adjoins the body section on the side facing the support rail, i.e. on the opposite side of the strand securing section relative to the body section.

The body section comprises an abutment surface for abutment against the receiving section of the support rail. Preferably, the abutment surface is positioned to abut the body section against the free end of the receiving section of the support rail. The free end of the receiving section of the support rail is hereby defined as the portion of the receiving section, which in cross-sectional view of the support rail defines the boundary of the opening of the cavity enclosed by the receiving section and that is distant from the portion of the receiving section connected to the rail back section.

The abutment surface of the body section may serve for secure and tight engagement of the clip to the support rail with low wiggling tolerance, but it may also serve as a centre of rotation for a rotation of the clip against the support rail about a clip axis perpendicular to the cross section of the support rail and the clip, respectively, to facilitate intentional removal (unclipping) of the clip from the support rail. In the appended figures showing an embodiment of the present invention, figure 4 shows the clip axis (designated "x" in figure 4) and the cylindrical axis (designated "z" in figure 4) perpendicular to the clip axis.

The user has the option to remove the clip from the support rail with low effort by first rotating the clip about its clip axis "x" (clock-wise in figure 4) to a certain degree and then simply twist the clip about its cylindrical axis "z" (clock-wise or counter clock-wise in figure 4). Thereby, the first rotation effects a disengagement of the latching profile of the second clip securing portion from the latching projection or the latching recess of the support rail, such that the subsequent twist of the clip requires less force to remove the clip than it would be required if the latching profile and the latching projection or the latching recess were in full contact or engagement, respectively.

The rail mounting section of the clip has a first clip securing portion and a second clip securing portion which have spaced-apart opposed portions extending into the cavity enclosed by the receiving section and engage on opposite sides with the inner wall of the cavity formed by the receiving section. The profiles of the first and second clip securing portions are arranged and designed to butt or rest against the inner wall of the receiving section, when the clip is mounted to the support rail.

At least one of said first and second clip securing portions is resiliently connected to said body section in such a manner that said clip securing portions are movable towards each other against a resilient force. When the clip securing portions of the clip are inserted through the opening into the cavity formed by the receiving section, they are forced or pressed together against the resilient force to allow them to enter into the opening of the cavity. Within the cavity the clip securing portions spread and brace towards their relaxed state to butt or rest against the inner wall of the receiving section and to engage the latching profile of the second clip securing portion of the clip with the latching projection or the latching recess of the support rail.

In an embodiment of the clip of the present invention the second clip securing portion, which has in cross-section a latching profile for latching engagement with the latching projection or the latching recess of the support rail, is resiliently connected to the body section, whereas the first clip securing section is formed in a rigid or non-resilient relationship with the body section. In the sense of the present invention "in a rigid or non-resilient relationship with the body section" means that the first clip securing section, compared to the "resiliently connected second clip securing section", does not significantly move or bend against the body section under regular load applied to handle and in use of the clip.

The clip further comprises a strand securing section which adjoins the body section on the side facing away from the support rail and has a support surface for the strand-like element and securing means for releasably fixing and holding the strand-like element on the support surface. The strand-like element may comprise one or more cables, one or more cable ducts, one or more tubes or one or more pipes. The strand securing section and the securing means of the clip are preferably designed to be able to securely fix and hold strand-like elements of different diameters and/or cross-sections.

In a preferred embodiment of the clip of the present invention the securing means for releasably securing and retaining the strand-like element to the support surface of the strand securing section comprises at least two hooks arranged on opposite sides of the strand securing section with respect to the support surface and being arranged and configured for hooking a strap, a rubber-elastic band or a rubber-elastic O-ring, such that the strap, the rubber-elastic band or the rubber-elastic O-ring is guided from one of the at least two hooks across the side of the strand-like element to be fastened facing away from the support surface of the strand securing section to the at least one further hook on the opposite side of the strand securing section for releasably fastening and holding the strand-like element on the support surface of the strand securing section. Rubber-elastic securing means, such as a band or an O-ring, allow for easy and secure fastening of strand-like elements of different diameters and/or cross-sections. Elasticity and size of the securing means are to be selected according to the desired range of diameters and/or cross-sections of the strand-like elements to be fastened and the desired holding force range.

In yet another preferred embodiment of the clip of the present invention the securing means comprise, at least on one of the opposite sides of the strand securing section with respect to the support surface, at least two hooks arranged side by side, preferably two, three or four hooks arranged side by side, which are arranged and formed in such a way that the strap, the rubber-elastic band or the rubber-elastic O-ring for a releasably fastening and holding of the strand-like element on the support surface of the strand-securing section can be hooked simultaneously on all or less than all of the hooks arranged side by side.

Providing two or more hooks at least on one side of the strand securing section allows for even more flexibility and a broader range of diameters and/or cross-sections of strand-like elements to be fastened to the strand securing section with securing means of one and the same elasticity and size. Depending on the diameter and/or cross-section of the strand-like element, the securing means is engaged with or hooked into only one, two or more of the hooks to achieve a sufficiently tight and secure fastening and holding of the strand-like element on the support surface of the strand-securing section.

In yet another preferred embodiment of the clip of the present invention a tilt lock section is provided on the strand securing section, said tilt lock section having a contact surface arranged to engage or contact the receiving section of the support rail upon rotation of the clip, wherein the tilt lock section is preferably formed as a portion of a hook of the strand securing section.

As described before, removal of the clip from the support rail can be realised with low effort by first rotating the clip about its clip axis "x" to a certain degree to effect a disengagement of the latching profile of the second clip securing portion from the latching projection or the latching recess of the support rail and to facilitate the subsequent twist of the clip about its cylindrical axis "z" to remove the clip from the support rail. The tilt lock section on the strand securing section is provided to limit the rotation of the clip about its clip axis "x" to avoid unintended removal or unclipping, respectively, of the clip from the support rail in case of an accidental force towards the direction of rotation, e. g. caused by a force exerted to the strand-like element. The abutment of the contact surface of the tilt lock section to the receiving section limits the maximum angle of rotation of the clip about its clip axis "x" to a degree that the first and second clip securing portions still remain within the cavity enclosed by the receiving section to hold the clip secured to the support rail. The tilt lock section avoids unintended removal of the clip from the support rail, but the allowed angle of rotation limited by the tilt lock section is still sufficient that the disengagement of the latching profile of the second clip securing portion from the latching projection or the latching recess of the support rail allows for easy removal of the clip by intended twist of the clip about its cylindrical axis "z".

The present invention provides means to securely hold strand-like elements, such as cables, cable ducts or harnesses, tubes or pipes, of various diameters and/or cross-sections in a detachable but still securely manner to a support rail. It allows to easily clip and unclip the strand-like elements to any point along the support rail and to tidy up the aesthetics and security of visible wiring. Thereby, one or more straight or even curved support rails may be used.

### FIGURES

Further advantages, features and possible applications of the present invention will become apparent from the following description of embodiments according to the invention and the associated figures. In the figures, the same functional elements, even if differently designed, are designated by the same reference numbers.

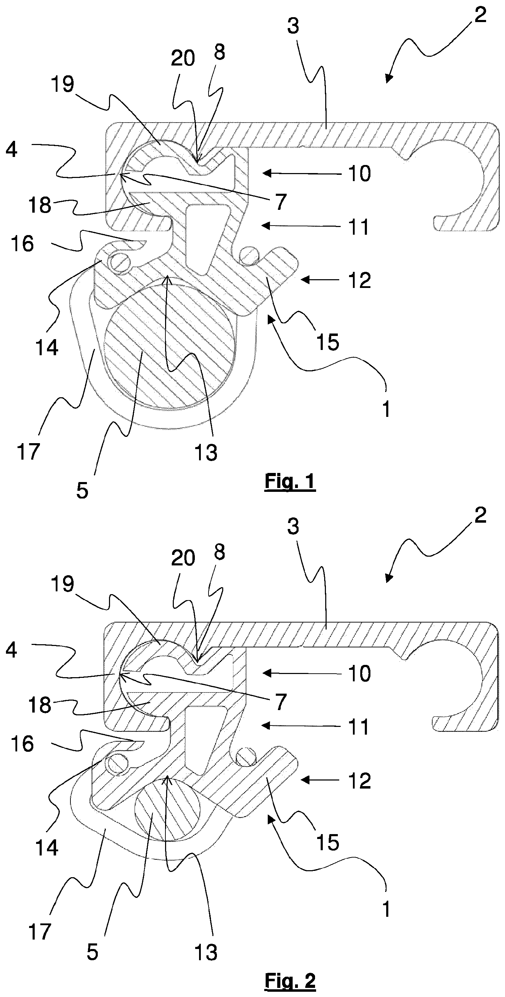

- Figure 1: shows a cross-sectional view of a support rail, a clip mounted thereto and a strand-like element fastened to the clip by a rubber elastic O-ring, according to an embodiment of the present invention with the cavity formed by the inner wall of the receiving section of the support rail having the form of a segment of a circle.
- Figure 2: shows the cross-sectional view of the support rail and the clip mounted thereto of figure 1 with a fastened strand-like element of a thinner diameter than in figure 1.
- Figure 3: shows the cross-sectional view of the support rail of figure 1 (without the mounted clip) indicating the angle α circumscribed by the inner wall of the receiving section.
- Figure 4: shows the cross-sectional view and a perspective view of the support rail, the clip mounted thereto and the strand-like element fastened to the clip of figure 1 with indications of the clip axis "x" and the cylindrical axis "z" of the clip and the directions of rotation for removal of the clip from the support rail with low effort, as described herein.

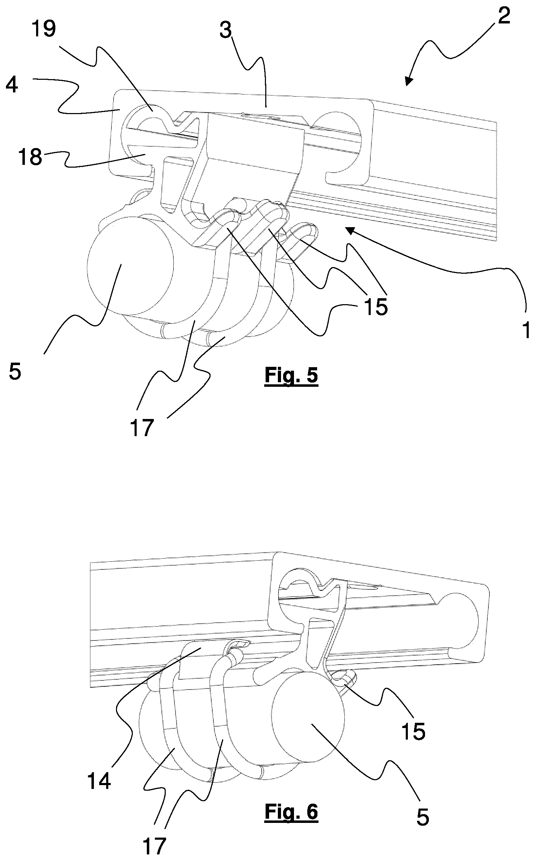

- Figures 5 and 6: show perspective views from different directions of the support rail, the clip mounted thereto and the strand-like element fastened to the clip of figure 1.

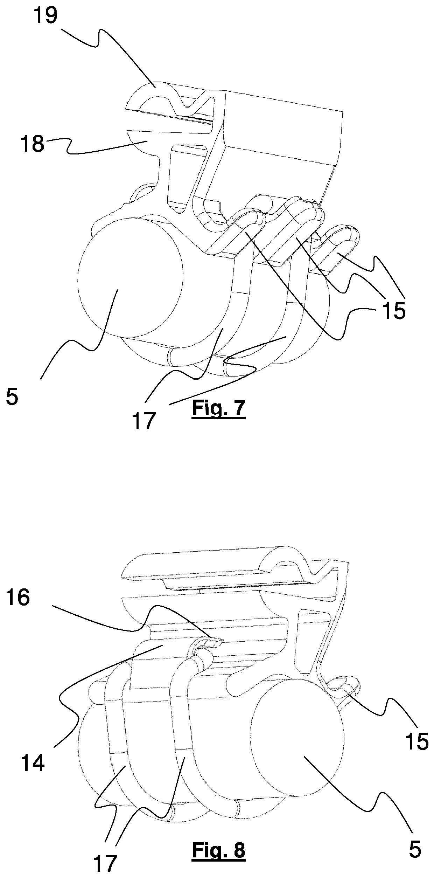

- Figures 7 and 8: show perspective views from different directions of the clip and the strand-like element fastened to the clip of figure 1 (without the support rail).

The figures show a preferred embodiment of the clip 1 of the present invention for receiving and detachably fastening a strand-like element 5 to a support rail 2. In the present case the support rail 2 has a symmetrical cross-sectional profile with two receiving sections 4 on opposite sides of the rail back section 3, similar to a rail known from telescopic slides, which profile allows for the mounting of clips on both sides of the support rail. However, for the purpose of the present invention a support rail with only one receiving section 4 is sufficient. In the direction perpendicular to the cross-section, the cross-sectional profile of the support rail 2 extends along at least a portion of the length of the support rail 2, preferably along its entire length.

In this embodiment the cross-sectional profile of the receiving section 4 has an inner wall 7 forming a cavity having the shape of a segment of a circle which circumscribes an angle α in the order of about 250° (see figure 3). At the transition from the rail back section 3 to the receiving section 4 of the support rail 2 a latching projection 8 is formed for latching and securing engagement with a corresponding latching profile 20 on the clip 1.

The clip 1 mounted to the support rail 2 is made in one piece of plastic by extrusion moulding, and it comprises a body section 11, a strand securing section 12 adjoining the body section 11 on the side facing away from the support rail 2, and a rail mounting section 10 adjoining the body section 11 on the side facing the support rail 2.

The body section 11 has an abutment surface, which abuts against the receiving section 4 of the support rail 2 and serves for secure and tight engagement of the clip to the support rail with low wiggling tolerance and as a centre of rotation for rotation of the clip 1 against the support rail 2 about a clip axis "x" perpendicular to the cross section of the support rail and the clip, respectively, to facilitate unclipping of the clip 1 from the support rail 2, as described herein above.

The strand securing section 12 has a support surface 13 for abutment of the strand-like element 5 and securing means in the form of hooks 14, 15 and a rubber-elastic O-ring 17 for releasably fixing and holding the strand-like element 5 to the support surface 13. In the present embodiment, the securing means comprise one single hook 14 on one side of the strand securing section 12 and three hooks 15 arranged side by side on the opposite side of the strand securing section 12. Depending on the diameter of the strand-like element 5, one and the same rubber-elastic O-ring can simultaneously be hooked to one, two or all three of the hooks 15 to achieve a sufficiently tight and secure fastening and holding of the strand-like element 5 to the support surface 13 of the strand-securing section 12.

The rail mounting section 10 comprises a first clip securing portion 18 and a second clip securing portion 19 which have spaced-apart opposed portions extending into the cavity enclosed by the receiving section 4 and engage on opposite sides with the inner wall 7 of the cavity formed by the receiving section 4. The first clip securing portion 18 is formed in a rigid and non-resilient relationship with the body section 11. The second clip securing portion 19 is resiliently connected to the body section 11 in such a manner that said clip securing portions 18 and 19 are movable towards each other against the resilient force required to push the second clip securing portion 19 towards the first clip securing portion 18. The second clip securing portion 19 has in cross-section a latching profile with a latching surface 20 for latching engagement with the latching projection 8 of the support rail 2.

The single hook 14 on one side of the strand securing section 12 comprises a portion bent back towards the body section 11 or the strand securing section 12, respectively, which forms a tilt lock section 16 having a contact surface arranged to contact the receiving section 4 of the support rail 2 and to limit the maximum angle of rotation when the clip is rotated about its clip axis "x". The tilt lock section 16 avoids unintended removal or unclipping, respectively, of the clip from the support rail.

For the purposes of the original disclosure, it is pointed out that all features, as they appear to a person skilled in the art from the present description, the drawings and the claims, even if they have been described specifically only in connection with certain specific further features, can be combined both individually and in any combination with other features or groups of features disclosed here, unless this has been expressly excluded or technical circumstances make such combinations impossible or pointless. A comprehensive, explicit description of all conceivable combinations of features is omitted here only for the sake of brevity and readability of the description.

While the invention has been illustrated and described in detail in the drawings and the foregoing description, this description of the invention is given by way of example only and is not intended to limit the scope of protection as defined by the claims. The invention is not limited to the embodiments shown.

Variations of the disclosed embodiments will be obvious to those skilled in the art from the drawings, the description and the appended claims. In the claims, the word "comprising" does not exclude other elements or steps, and the indefinite article "a" does not exclude a plurality. The mere fact that certain features are claimed in different claims does not exclude their combination. Reference signs in the claims are not intended to limit the scope of protection.

### REFERENCE LIST

- 1: clip
- 2: support rail
- 3: rail back section
- 4: receiving section
- 5: strand-like element
- 7: inner wall of receiving section
- 8: latching projection
- 10: rail mounting section
- 11: body section
- 12: strand securing section
- 13: support surface for strand-like element
- 14: hook
- 15: hook
- 16: tilt lock section
- 17: rubber elastic O-ring
- 18: first clip securing portion
- 19: second clip securing portion
- 20: latching surface

## Claims

1. A system for receiving and detachably fastening a strand-like element, comprising a clip (1) and a support rail (2),
wherein the support rail (2) has a cross-sectional profile which in a direction perpendicular to the cross-section extends over at least a portion of the length of the support rail (2) and which cross-sectional profile is formed by a rail back section (3) and a receiving section (4) which is connected to the rail back section (3), wherein the cross-sectional profile of the receiving section (4) has an inner wall (7) which is formed by one or more curved and/or straight portions and which circumscribes a cavity enclosed by the receiving section (4), and wherein a latching projection (8) or a latching recess is formed at the transition or adjacent to the transition from the rail back section (3) to the receiving section (4),
the clip (1) being designed for detachable latching mounting on the support rail (2) and, in relation to a state mounted on the support rail (2), comprising the following:
a body section (11) with an abutment surface for abutment against the receiving section (4) of the support rail (2),
a strand securing section (12) which adjoins the body section (11) on the side facing away from the support rail (2) and has a support surface (13) for the strand-like element (5) and securing means (14, 15, 17) for releasably fixing and holding the strand-like element on the support surface (13),
a rail mounting section (10) adjoining the body section (11) on the side facing the support rail (2) and having
a first clip securing portion (18) and a second clip securing portion (19) which have spaced-apart opposed portions extending into the cavity enclosed by the receiving section (4) and engage on opposite sides with the inner wall (7) of the cavity formed by the receiving section (4),
wherein at least one of said first and second clip securing portions (18, 19) is resiliently connected to said body section (11) in such a manner that said clip securing portions (18, 19) are movable towards each other against a resilient force,
wherein the second clip securing portion (19) has in cross-section a latching profile (20) for latching engagement with the latching projection (8) or the latching recess of the support rail (2).

2. The system for receiving and detachably fastening a strand-like element (5) to a support rail (2) according to claim 1, wherein the inner wall (7) of the receiving section (4) of the support rail is formed by a circularly curved portion and circumscribes a segment of a circle of an angle of 180° to 300°.

3. The system according to any one of the preceding claims, wherein the clip is made in one piece or in several pieces, preferably in one piece, of plastic.

4. The system according to any one of the preceding claims, wherein the strand-like element comprises one or more cables, one or more cable ducts, one or more tubes or one or more pipes.

5. The system according to any one of the preceding claims, wherein the securing means (14, 15, 17) for releasably securing and retaining the strand-like element to the support surface (13) of the strand securing section (12) comprises at least two hooks (14, 15) arranged on opposite sides of the strand securing section (12) with respect to the support surface (13) and being arranged and configured for hooking a strap, a rubber-elastic band or a rubber-elastic O-ring (17), such that the strap, the rubber-elastic band or the rubber-elastic O-ring (17) is guided from one of the at least two hooks (14) across the side of the strand-like element (5) to be fastened facing away from the support surface (13) of the strand securing section (12) to the at least one further hook (15) on the opposite side of the strand securing section (12) for releasably fastening and holding the strand-like element (5) on the support surface (13) of the strand securing section (12).

6. The system according to claim 5, wherein the securing means (14, 15) comprise, at least on one of the opposite sides of the strand securing section (12) with respect to the support surface (13), at least two hooks (15) arranged side by side, preferably two, three or four hooks (15) arranged side by side, which are arranged and formed in such a way that the strap, the rubber-elastic band or the rubber-elastic O-ring (17) for a releasably fastening and holding of the strand-like element on the support surface (13) of the strand-securing section (12) can be hooked simultaneously on all or less than all of the hooks (15) arranged side by side.

7. The system according to any one of the preceding claims, wherein the first clip securing section (18) is formed in a rigid or non-resilient relationship with the body section (11).

8. The system according to any one of the preceding claims, wherein a tilt lock section (16) is provided on the securing section (12), said tilt lock section (16) having a contact surface arranged to engage or contact the receiving section (4) of the support rail (2) upon rotation of the clip, wherein the tilt lock section (16) is preferably formed as a portion of a hook (14) of the securing section (12).

## Patentansprüche

1. System zur Aufnahme und lösbaren Befestigung eines strangförmigen Elements , aufweisend einen Clip (1) und eine Tragschiene (2),
wobei die Tragschiene (2) ein Querschnittsprofil aufweist, das sich in einer Richtung senkrecht zum Querschnitt über mindestens einen Teil der Länge der Tragschiene (2) erstreckt und das durch einen Schienenrückenabschnitt (3) und einen mit dem Schienenrückenabschnitt (3) verbundenen Aufnahmeabschnitt (4) gebildet ist, wobei das Querschnittsprofil des Aufnahmeabschnitts (4) eine von einem oder mehreren gekrümmten und/oder geraden Abschnitten gebildete Innenwand (7) aufweist, die einen von dem Aufnahmeabschnitt (4) umschlossenen Raum umschreibt, und wobei am Übergang oder angrenzend an den Übergang von dem Schienenrückenabschnitt (3) zu dem Aufnahmeabschnitt (4) ein Rastvorsprung (8) oder eine Rastausnehmung ausgebildet ist,
der Clip (1) für eine lösbare rastende Montage an der Tragschiene (2) ausgebildet ist und in Bezug auf einen an der Tragschiene (2) montierten Zustand Folgendes aufweist
einen Rumpfabschnitt (11) mit einer Anlagefläche zur Anlage an den Aufnahmeabschnitt (4) der Tragschiene (2),
einen Strangsicherungsabschnitt (12), der sich auf der von der Tragschiene (2) abgewandten Seite an den Rumpfabschnitt (11) anschließt und eine Anlagefläche (13) für das strangförmige Element (5) sowie Sicherungsmittel (14, 15, 17) zum lösbaren Fixieren und Halten des strangförmigen Elements auf der Anlagefläche (13) aufweist,
einen Schienenbefestigungsabschnitt (10), der sich auf der der Tragschiene (2) zugewandten Seite an den Rumpfabschnitt (11) anschließt und aufweist
einen ersten Clip-Sicherungsabschnitt (18) und einen zweiten Clip-Sicherungsabschnitt (19), die voneinander beabstandete, einander gegenüberliegende Abschnitte aufweisen, die sich in den von dem Aufnahmeabschnitt (4) eingeschlossenen Raum erstrecken und auf gegenüberliegenden Seiten mit der Innenwand (7) des von dem Aufnahmeabschnitt (4) gebildeten Raums in Eingriff stehen,
wobei mindestens einer der ersten und zweiten Clip-Sicherungsabschnitte (18, 19) elastisch mit dem Rumpfabschnitt (11) verbunden ist, so dass die Clip-Sicherungsabschnitte (18, 19) gegen eine elastische Kraft aufeinander zu bewegbar sind,
wobei der zweite Clip-Sicherungsabschnitt (19) im Querschnitt ein Rastprofil (20) für den Rasteingriff mit dem Rastvorsprung (8) oder der Rastausnehmung der Tragschiene (2) aufweist.

2. System zur Aufnahme und lösbaren Befestigung eines strangförmigen Elements (5) an einer Tragschiene (2) nach Anspruch 1, wobei die Innenwand (7) des Aufnahmeabschnitts (4) der Tragschiene durch einen kreisförmig gekrümmten Abschnitt gebildet wird und ein Kreissegment mit einem Winkel von 180° bis 300° umschreibt.

3. System nach einem der vorhergehenden Ansprüche, wobei der Clip in einem Stück oder in mehreren Stücken, vorzugsweise in einem Stück, aus Kunststoff hergestellt ist.

4. System nach einem der vorangegangenen Ansprüche, wobei das strangförmige Element ein oder mehrere Kabel, einen oder mehrere Kabelkanäle, einen oder mehrere Schläuche oder ein oder mehrere Rohre umfasst.

5. System nach einem der vorhergehenden Ansprüche, wobei die Befestigungsmittel (14, 15, 17) zum lösbaren Befestigen und Halten des strangförmigen Elements an der Anlagefläche (13) des Strangsicherungsabschnitts (12) mindestens zwei Haken (14, 15) umfassen, die auf gegenüberliegenden Seiten des Strangsicherungsabschnitts (12) in Bezug auf die Anlagefläche (13) angeordnet sind und zum Einhaken eines Riemens, eines gummielastischen Bands oder eines gummielastischen O-Rings (17) angeordnet und ausgebildet sind, so dass der Riemen, das gummielastische Band oder der gummielastische O-Ring (17) von einem der mindestens zwei Haken (14) über die von der Anlagefläche (13) des Strangsicherungsabschnitts (12) abgewandte Seite des zu befestigenden strangförmigen Elements (5) zu dem mindestens einen weiteren Haken (15) auf der gegenüberliegenden Seite des Strangsicherungsabschnitts (12) geführt wird, um das strangförmige Element (5) auf der Anlagefläche (13) des Strangsicherungsabschnitts (12) lösbar zu befestigen und zu halten.

6. System nach Anspruch 5, wobei die Befestigungsmittel (14, 15) zumindest auf einer der gegenüberliegenden Seiten des Strangsicherungsabschnitts (12) in Bezug auf die Anlagefläche (13) mindestens zwei nebeneinander angeordnete Haken (15), vorzugsweise zwei, drei oder vier nebeneinander angeordnete Haken (15), umfassen, die so angeordnet und ausgebildet sind, dass der Riemen, das gummielastische Band oder der gummielastische O-Ring (17) für eine lösbare Befestigung und Halterung des strangförmigen Elements an der Anlagefläche (13) des Strangsicherungsabschnitts (12) an allen oder weniger als allen der nebeneinander angeordneten Haken (15) gleichzeitig eingehakt werden kann.

7. System nach einem der vorhergehenden Ansprüche, wobei der erste Clip-Sicherungsabschnitt (18) in einer starren oder nicht federnden Beziehung zum Rumpfabschnitt (11) ausgebildet ist.

8. System nach einem der vorhergehenden Ansprüche, wobei ein Kippsicherungsabschnitt (16) an dem Sicherungsabschnitt (12) vorgesehen ist, wobei der Kippsicherungsabschnitt (16) eine Kontaktfläche aufweist, die so angeordnet ist, dass sie bei einer Drehung des Clips in den Aufnahmeabschnitt (4) der Stützschiene (2) eingreift oder diesen berührt, wobei der Kippsicherungsabschnitt (16) vorzugsweise als ein Teil eines Hakens (14) des Sicherungsabschnitts (12) ausgebildet ist.

## Revendications

1. Système pour recevoir et attacher de manière amovible un élément du type toron, comprenant une attache (1) et un rail de support (2),
dans lequel le rail de support (2) présente un profil en section transversale qui, dans une direction perpendiculaire à la section transversale, s'étend sur au moins une partie de la longueur du rail de support (2) et dont le profil en section transversale est formé par une section arrière de rail (3) et une section de réception (4) qui est reliée à la section arrière de rail (3), dans lequel le profil en section transversale de la section de réception (4) présente une paroi interne (7) qui est formée par une ou plusieurs parties courbes et/ou droites et qui circonscrit une cavité enfermée par la section de réception (4), et dans lequel une saillie de verrouillage (8) ou un évidement de verrouillage est formé(e) au niveau de la transition ou de manière adjacente à la transition de la section arrière de rail (3) à la section de réception (4),
l'attache (1) étant conçue pour un montage à verrouillage amovible sur le rail de support (2) et, par rapport à un état monté sur le rail de support (2), comprenant ce qui suit :
une section de corps (11) avec une surface de butée pour la mise en butée contre la section de réception (4) du rail de support (2),
une section de fixation de toron (12) qui jouxte la section de corps (11) sur le côté opposé au rail de support (2) et présente une surface de support (13) pour l'élément du type toron (5) et des moyens de fixation (14, 15, 17) pour assujettir et maintenir de manière libérable l'élément du type toron sur la surface de support (13),
une section de montage de rail (10) jouxtant la section de corps (11) sur le côté orienté vers le rail de support (2) et présentant
une première partie de fixation par attache (18) et une seconde partie de fixation par attache (19) qui présentent des parties opposées espacées s'étendant dans la cavité enfermée par la section de réception (4) et sont en prise sur des côtés opposés avec la paroi interne (7) de la cavité formée par la section de réception (4),
dans lequel au moins l'une desdites première et seconde parties de fixation par attache (18, 19) est reliée de manière élastique à ladite section de corps (11) de manière à ce que lesdites parties de fixation par attache (18, 19) soient mobiles l'une vers l'autre à l'encontre d'une force élastique,
dans lequel la seconde partie de fixation d'attache (19) présente en section transversale un profil de verrouillage (20) pour une mise en prise de verrouillage avec la saillie de verrouillage (8) ou l'évidement de verrouillage du rail de support (2).

2. Système pour recevoir et attacher de manière amovible un élément du type toron (5) à un rail de support (2) selon la revendication 1, dans lequel la paroi interne (7) de la section de réception (4) du rail de support est formée par une partie courbée circulairement et circonscrit un segment d'un cercle d'un angle de 180° à 300°.

3. Système selon l'une quelconque des revendications précédentes, dans lequel l'attache est réalisée en une pièce ou en plusieurs pièces, de préférence en une pièce, en plastique.

4. Système selon l'une quelconque des revendications précédentes, dans lequel l'élément du type toron comprend un ou plusieurs câbles, un ou plusieurs conduits de câbles, un ou plusieurs tubes ou un ou plusieurs tuyaux.

5. Système selon l'une quelconque des revendications précédentes, dans lequel les moyens de fixation (14, 15, 17) pour fixer et retenir de manière libérable l'élément du type toron à la surface de support (13) de la section de fixation de toron (12) comprennent au moins deux crochets (14, 15) agencés sur des côtés opposés de la section de fixation de toron (12) par rapport à la surface de support (13) et agencés et configurés pour accrocher une sangle, une bande élastique en caoutchouc ou un joint torique élastique en caoutchouc (17), de sorte que la sangle, la bande élastique en caoutchouc ou le joint torique élastique en caoutchouc (17) est guidé(e) à partir de l'un des au moins deux crochets (14) sur toute l'étendue du côté de l'élément du type toron (5) à attacher à l'opposé de la surface de support (13) de la section de fixation de toron (12) vers l'au moins un autre crochet (15) sur le côté opposé de la section de fixation de toron (12) pour attacher et maintenir de manière libérable l'élément du type toron (5) sur la surface de support (13) de la section de fixation de toron (12).

6. Système selon la revendication 5, dans lequel les moyens de fixation (14, 15) comprennent, au moins sur un des côtés opposés de la section de fixation de toron (12) par rapport à la surface de support (13), au moins deux crochets (15) agencés côte à côte, de préférence deux, trois ou quatre crochets (15) agencés côte à côte, qui sont agencés et formés de sorte que la sangle, la bande élastique en caoutchouc ou le joint torique élastique en caoutchouc (17) pour une attache et un maintien libérables de l'élément du type toron sur la surface de support (13) de la section de fixation de toron (12) peuvent être accrochés simultanément sur tous les ou un nombre inférieur à tous les crochets (15) agencés côte à côte.

7. Système selon l'une quelconque des revendications précédentes, dans lequel la première section de fixation par attache (18) est formée dans une relation rigide ou non élastique avec la section de corps (11).

8. Système selon l'une quelconque des revendications précédentes, dans lequel une section de blocage d'inclinaison (16) est prévue sur la section de fixation (12), ladite section de blocage d'inclinaison (16) présentant une surface de contact agencée pour être en prise ou entrer en contact avec la section de réception (4) du rail de support (2) lors de la rotation de l'attache, dans lequel la section de blocage d'inclinaison (16) est de préférence formée en tant que partie d'un crochet (14) de la section de fixation (12).
